# EUROPEAN PATENT APPLICATION

(11) **EP 2 042 363 A2**
(43) Date of publication of application: **01.04.2009**
(21) Application number: 08017022.8
(22) Date of filing: 26.09.2008
(51) Int. Cl.: B60J 10/08

(54) **Door weatherstrip**

(30) Priority: 28.09.2007 JP 2007253240; 31.07.2008 JP 2008197616
(71) Applicant: TOYODA GOSEI CO., LTD., Nishi-Kasugai-gun, Aichi-ken, 452-8564 (JP)
(72) Inventor: Hashimoto, Yoshio, Nishikasugai-gun Aichi-ken 452-8562 (JP); Toki, Satoshi, Nishikasugai-gun Aichi-ken 452-8562 (JP); Minoura, Hideaki, Nishikasugai-gun Aichi-ken 452-8562 (JP); Aritake, Masanori, Nishikasugai-gun Aichi-ken 452-8562 (JP)
(74) Representative: Kramer - Barske - Schmidtchen

(57) **Abstract**

A door weatherstrip includes a mounted base portion (11) which is mounted along an outer circumference of a door frame (7), and a seal portion (12) which extends in an outer circumferential direction of a door (3) from the mounted base portion (11). The mounted base portion (11) includes a base bottom portion (13), a vehicle-interior side wall portion (14) and a vehicle-exterior side wall portion (15), and an isolating wall portion (16). The mounted base portion (11) is made from an EPDM sponge rubber material into which polyethylene is mixed to have a specific gravity of 0.2 or larger and smaller than 0.45 and a low expansion stress of 200 kPa or larger. The seal portion (12) is made from an EPDM sponge rubber material having a specific gravity of 0.45 or larger and 1.0 or smaller and a low expansion stress of 120 kPa or larger and smaller than 200 kPa. Thus, the door weatherstrip is provided in which the specific gravity of the mounted base portion is made smaller than the specific gravity of the seal portion and a material rigidity of the mounted base portion is larger than a material rigidity of the seal portion

## Description

### BACKGROUND OF THE INVENTION

### 1. Field of the Invention

The present invention relates to a door weatherstrip which includes a mounted base portion adapted to be mounted on a mounting portion along a peripheral part of a vehicle door and a seal portion which extends from the mounted base portion in an outer circumferential direction of the door.

### 2. Related Art

In general, a door weatherstrip is mounted on a peripheral edge portion a vehicle (automotive vehicle) door. The door weatherstrip includes a mounted base portion adapted to be mounted on a mounting portion along a peripheral part of the door and a hollow seal portion formed integrally with the mounted base portion and having a hollow portion. In addition, by the hollow seal portion of the door weatherstrip being brought into press contact with a peripheral part of a door opening in a vehicle body (an automotive vehicle body) when the door is closed, a seal is established between the door and the vehicle body.

Incidentally, although the door weatherstrip includes the mounted base portion and the hollow seal portion as has been described above, different parts of the door weatherstrip have respective different functions. Namely, since the mounted base portion is the part which is mounted on the mounting portion along the peripheral part of the door, the mounted base portion is required to preserve its mounted configuration over a long period of time. On the other hand, the hollow seal portion is required to have a deformation compliance when it is brought into press contact with the peripheral part of the door opening in the vehicle body.

In conventional door weatherstrips, however, in many cases, both a mounted base portion and a hollow seal portion are formed from the same material, and hence, it has been difficult to realize the aforesaid incompatible performances. On the other hand, in fact, there have been proposed techniques in which a mounted base portion and a hollow seal portion are made from different materials (for example, refer to JP-A-2002-178769 and JP-A-60-206723). In JP-A-2002-178769, a solid rubber material is used for a mounted base portion. In addition, in JP-A-60-206723, a low expanded sponge rubber material (whose specific gravity ranges 0.7 to 0.9) is used for a mounted base portion.

When the solid rubber material and the low expanded sponge rubber materials are used for the mounted base portion, although the rigidity of the mounted base portion can be ensured and a stabilized mounted state can be realized, there are caused concerns about several unfavorable facts, for example, that the mounting work faces difficulty in fitting the mounted base portion in a retained on the door which has a substantially C-shaped cross section or that the rigidity of the whole mounted base portion (in particular, a material rigidity of a mounted base portion which includes an isolating wall portion lying between the mounted base portion and the seal portion and which is formed to have an angled D-or O-shape) becomes too high, and hence a door closing load when the door is closed has to be increased when compared with a case where the mounted base portion is made from a normal sponge rubber material.

In addition, the use of the solid rubber material and the low expanded sponge rubber material for the mounted base portion is against the recent tendency of reduction in vehicle weight.

### SUMMARY OF THE INVENTION

The invention has been made with a view to solving the aforesaid problems and an object thereof is to provide a door weatherstrip which can not only realize stabilization of its mounted state and increase in sealing properties but also meet the recent demand for reduced vehicle weight.

Hereinafter, suitable means for attaining the object will be itemized. In addition, functions and advantages will be added which are associated with and specific to the respective means.
Means 1 : A door weatherstrip comprising a mounted base portion adapted to be mounted on a mounting portion along a peripheral part of a vehicle door and a seal portion extending from the mounted base portion in an outer circumferential direction of the door and adapted to be brought into press contact with a peripheral part of a door opening in a vehicle body such that the door is closed and made from an EPDM (ethylene-propylene-diene copolymer) sponge rubber material, wherein the mounted base portion is made from a sponge rubber material having a specific gravity of 0.2 or larger and smaller than 0.45 and a low expansion stress of 200 kPa or larger, wherein
the seal portion is made from a sponge rubber material having a specific gravity of 0.45 or larger and 1.0 or smaller and a low expansion stress of 120 kPa or larger and smaller than 200 kPa, whereby the specific gravity of the mounted base portion is made smaller than the specific gravity of the seal portion, and a material rigidity of the mounted base portion is made larger than a material rigidity of the seal portion.

According to Means 1, by the mounted base portion being made from the sponge rubber material having the specific gravity of 0.2 or larger and smaller than 0.45 and the low expansion stress of 200 kPa or larger and the seal portion being made from the sponge rubber material having the specific gravity of 0.45 or larger and 1.0 or smaller and the low expansion stress of 120 kPa or larger and smaller than 200 kPa, the specific gravity of the mounted base portion is made smaller than the specific gravity of the seal portion, and the material rigidity of the mounted base portion is made larger than the material rigidity of the seal portion.

Because of this, the door weatherstrip is mounted, the mounted base portion is not deformed unnecessarily, thereby making it possible to realize the stabilized mounted state. On the other hand, since the material rigidity of the seal portion is made relatively low as represented by the low expansion stress of 120 kPa or larger and smaller than 200 kPa, the seal portion has a superior deformation compliance when the seal portion is brought into press contact with the peripheral part of the door opening such that the door is closed. As a result, an increase in sealing properties can be realized.

Moreover, since both the mounted base portion and the seal portion are made from the EPDM sponge rubber material and are given the specific gravities of 0.2 or larger and smaller than 0.45 and 0.45 or larger and 1.0 or smaller, respectively, a reduction in the weight of the whole door weatherstrip can be realized. In addition, the mounted base portion is made from the material having the low expansion stress of 200 kPa or larger, and although the material rigidity of the mounted base portion is made relatively large by the material, the material is sponge rubber. Hence, when compared with a case where the mounted base portion is made of a solid material, the mounted base portion is easy to be deformed when it is mounted, and once it is mounted, the shape of the mounted base portion is made difficult to be deformed. As a result, for example, the occurrence of a situation can be suppressed in which when the door is closed, the mounted base portion is deformed and the seal portion is also deformed in association with the deformation of the mounted base portion, so as to increase the door closing load.

In addition, since the mounted base portion is made from the sponge rubber material having the specific gravity of 0.2 or larger and smaller than 0.45 and the low expansion stress of 200 kPa or larger, the mounted base portion can easily be curved also when the mounted base portion is curved along the mounting portion on the peripheral part of the door to be mounted thereon. With respect to the compliance when the mounted base portion is mounted in a curved manner, when compared with the conventional case where the mounted base portion is made from the solid rubber material and the low expanded sponge rubber material, the highly expanded sponge rubber material of the invention is superior to those conventional materials.

In addition, as has been described above, the low expansion stress is raised as an index when taking into consideration the rigidity of the sponge rubber material from which the mounted base portion or the like is made. More specifically, the rigidity can be evaluated by the "predetermined elongation tensile stress" M25 which is regulated under "JIS K6251" (a value resulting from division of a tensile force when a predetermined elongation (25%) is imparted to a specimen by an initial sectional area of the specimen) (this will be true hereinafter).

In addition, according to Means 1, since the low expansion stress of the sponge rubber material from which the mounted base portion is made is 200 kPa or larger, the function and advantage in relation to stabilization of the mounted state can be provided in a more ensured manner.

Here, in the event that the specific gravity of the mounted base portion is smaller than 0.2, it becomes difficult to make the low expansion stress be 200 kPa or larger, while in the case of the specific gravity being 0.45 or larger, although the low expansion stress of 200 kPa or larger can easily be met, there will be provided no large difference in weight from the conventional sponge material, and hence, the demand for weight reduction cannot be met.

In the seal portion, in the event that the specific gravity is made 0.45 or smaller or in the event that the low expansion stress is made smaller than 120 kPa, the repulsive force from the peripheral part of the door opening which results when the seal portion is brought into press contact with the peripheral part of the door opening such that the door is closed is reduced, and as a result, there is caused a fear that the sealing properties are reduced. In addition., also in the seal portion, in the event that the specific gravity is made larger than 1.0, the demand for reduced weight cannot be met, and the material rigidity becomes too high, whereby the repulsive force from the peripheral part of the door opening is increased, and the closing condition of the door is deteriorated.

Furthermore, in the event that the seal portion is made from a sponge rubber material having a low expansion str.ess of 200 kPa or larger, the material rigidity becomes too high, whereby the repulsive force from the peripheral part of the door opening is increased, and the closableness of the door is deteriorated.

In addition, it is more desirable that the low expansion stress of the seal portion is made to fall in a range of 120 kPa or larger to smaller than 180 kPa, and is much more desirable that it fall in a range of 120 kPa or larger to smaller than 150 kPa. By adopting such configurations, the flexibility of the seal portion is enhanced, and the press contact of the seal portion with the peripheral part of the door opening when the door is closed or such that the door is closed is implemented flexibly with good compliance, whereby the sealing properties are enhanced.
Means 2: A door weatherstrip as set forth in Means 1, wherein
the mounted base portion comprises a base bottom portion, a vehicle-interior side wall portion and a vehicle-exterior side wall portion which extend from the base bottom portion in the outer circumferential direction of the door and an isolating wall portion which connects together the vehicle-interior side wall portion and the vehicle-exterior side wall portion and isolates the base bottom portion from the seal portion, and wherein
material rigidities of the base bottom portion, the vehicle-interior and vehicle-exterior side walls and the isolating wall portion are made larger than the material rigidity of the seal portion.

According to Means 2, the material rigidities of not only the base bottom portion of the mounted base portion and the vehicle-interior and vehicle-exterior side walls but also the isolating wall portion between the mounted base portion and the seal portion are made to have the low expansion stress of 200 kPa or larger, so as to be larger than the material rigidity of the seal portion. Because of this, for example, when a head portion of a mounting clip is attempted to be brought into engagement with the isolating wall portion, since the rigidity of the isolating wall portion is relatively large, a mounted state of the clip can be stabilized. As a result, a more stabilized mounted state can also be realized.
Means 3: A door weatherstrip as set forth in Means 1 or 2, wherein
the seal portion includes a hollow seal portion which has a hollow portion in an interior thereof, and wherein
the material rigidity of the mounted base portion is made larger than the material rigidity of the hollow seal portion.

The seal portion of Means 3 is such as to include the hollow seal portion having the hollow portion in an interior thereof. In this case, in the press contact of the peripheral part of the door opening in the vehicle body with seal portion, since the hollow seal portion is deformed relatively easily in compression shape or bending shape, a seal can be made with a predetermined seal width.
Means 4: A door weatherstrip as set forth in Means 3, wherein
the seal portion includes further a seal lip which is situated further transversely outwards than the hollow seal portion, and wherein
the material rigidity of the mounted base portion is made larger than a material rigidity of the seal lip.

According to Means 4, furthermore, also in the event that the seal portion has the seal lip which is situated further transversely outwards than the hollow seal portion, since the mounted base portion is mounted in a stabilized manner, the seal lip can be deformed while following along the peripheral part of the door opening in the vehicle body without being deformed unnecessarily.
Means 5: A door weatherstrip as set forth in any of Means 1 to 4, wherein
the mounted base portion is made from a sponge rubber maternal into which a polyolefin-based resin is mixed.

According to Means 1, although the foaming ratio of the material only has to be increased to reduce the specific gravity of the mounted base portion and reduce the weight of the weatherstrip, in the event that the foaming ratio is simply increased, the material rigidity is decreased, and the function of the mounted base portion cannot be fulfilled. When the foaming ratio of a normal sponge rubber is increased with its specific gravity ranging from 0.2 or larger to smaller than 0.45, a low expansion stress in the range of the order of 100 kPa to 150 kPa is provided. In this respect, according to Means 5, since the polyolefin-based resin is mixed in the mounted base portion, the material rigidity can be made large due to the existence of the resin in question. In addition, the elastic restoration performance is not required for the mounted base portion so much as for the seal portion. Because of this, even though a slight "set" is produced in the mounted base portion by the mixing of the resin thereinto, there is caused no specific problem with the function of the mounted base portion. In addition, as polyolefin-based resins, although a polyethylene resin is raised as a representative example, there are additionally raised a polypropylene resin, an ethylene-octene resin and the like. In addition, the amount of polyolefin-based resin mixed is 3 to 10 parts by weight per 100 parts by weight of rubber.

In case the amount of the resin mixed is less than 3 parts by weight, it is difficult to ensure the low expansion stress of 200 kPa or larger. In contrast, in case the amount of the resin mixed is more than 10 parts by weight, since the low expansion stress becomes too high and the resulting mounted base portion becomes too hard and expands less, when mounted along the peripheral part of the door opening in the vehicle body, the mounted base portion becomes difficult to be curved and the following deformation thereof becomes difficult.

In this respect, according to Means 5, since the polyolefin-based resin is mixed into the material from which the mounted base portion is made and the low expansion stress of the mounted base portion is made to be 200 kPa or larger, the function and advantage in relation to the stabilization of the mounted state of the mounted base portion can be provided in an ensured manner.
Means 6: A door weatherstrip as set forth in any of Means 1 to 4, wherein
diene loadings in rubber of the EPDM sponge rubber material of the mounted base portion is more than diene loadings in rubber of the seal portion and a crosslinked density of the EPDM sponge rubber material of the mounted base portion is enhanced so as to be more than a crosslinked density of the seal portion when the EPDM sponge rubber material of the mounted base portion is vulcanized, so that the low expansion stress of the EPDM sponge rubber material of the mount base portion is increased to 200 kPa or larger.

According to Means 6, since the diene loadings in rubber of the EPDM sponge rubber material of the mounted base portion is more than the diene loadings in rubber of the seal portion and the crosslinked density of rubber of resulting when vulcanized is enhanced so as to be more than a crosslinked density of the seal portion such that the low expansion stress of the EPDM sponge rubber material of the mounted base portion is increased to 200 kPa or larger, the aforesaid function and advantage in relation to the stabilization of the mounted state of the mounted base portion can be provided in an ensured manner.

Furthermore, as will be seen from Configurations 7, 8 which will be described below, the invention can also be applied to a door weatherstrip comprising a clip attached to a mounted base portion.
Configuration 7: A door weatherstrip of any of Means 1 to 6 comprising a clip attached to a mounted base portion, wherein
the clip comprises an engagement portion adapted to be fitted in a mounting hole formed in the mounted base portion for engagement and a locking portion adapted to be locked in the mounted base portion,
the engagement portion comprising a rod-like shaft portion, an umbrella portion which expands from one end portion of the shaft portion in a flange-like manner and a support portion which extends from an outer circumferential portion of the shaft portion outwards and towards the umbrella portion side,
the locking portion comprising an elongated locking piece portion which is situated on an inner surface side of the mounted base portion and a connecting portion which extends from the locking piece portion in a direction which intersects a longitudinal direction of the looking piece portion to penetrate the mounted base portion and is then connected to the umbrella portion, thereby
a peripheral edge portion of the mounting hole being held between the umbrella portion and a distal end portion of the support portion by the engagement portion which projects from the mounted base portion being fitted in the mounting hole, and wherein
the clip is attached to the mounted base portion by the use of an inserting device comprising an inserting pin which has a substantially cylindrical shape and a pointed distal end, with the inserting pin caused to pierce the mounted base portion from a bottom surface side thereof and the locking piece portion sent out to the inner surface side of the mounted base portion which is an opposite side to the bottom surface thereof through an inner circumferential side of the inserting pin. Means 8: A door weatherstrip wherein the clip is attached to the mounted base portion by the inserting pin being caused to pierce the base bottom portion and the isolating wall portion and the locking piece portion being sent out to an inner surface side (a hollow portion side) of the isolating wall portion (refer to Means 2) which is opposite to the bottom surface of the mounted base portion.

According to Configurations 7, 8, since the locking piece portion and the connecting portion have to be made relatively thin due to their configurations, there is caused a concern about the stabilized mounted state of the clip. In this respect, as has been described in the respective configurations described above, since the rigidity of the mounted base portion is relatively large, even though the locking piece portion and the connecting portion are so thin, the stabilized mounted state of the clip can be ensured. Namely, by using the clip that has been described above, the following function and advantage can be provided: "It becomes possible to eliminate work to cut out or remove part of the mounted base portion so as to form an opening (a hole) therein in order to attach the clip to the door weatherstrip. Because of this, the generation of formed waste material in association with the formation of the opening can be avoided, and hence, labor hours and a device (a sucking device or the like) for removing the formed waste material can be omitted. As a result, an enhancement in productivity and quality can be realized." Due to the function and advantage so provided, a further stabilized mounted state of the door weatherstrip can be realized.

### BRIEF DESCRIPTION OF THE DRAWINGS

Fig. 1 is a perspective view showing exemplarily an automotive vehicle in one embodiment.
Fig. 2 is a sectional view showing a door weatherstrip.
Fig. 3 is a perspective view showing a clip.
Fig. 4 is an explanatory diagram showing an attaching step of the clip.
Fig. 5 is an explanatory diagram showing another attaching step of the clip.
Fig. 6. is an explanatory diagram showing a further attaching step of the clip.
Fig. 7 is a perspective view showing exemplarily a distal end portion of an inserting device.
Fig. 8 is a sectional view showing a door weather strip according to another embodiment of the invention.

### DETAILED DESCRIPTION OF THE PREFERRED EMBODIMENTS

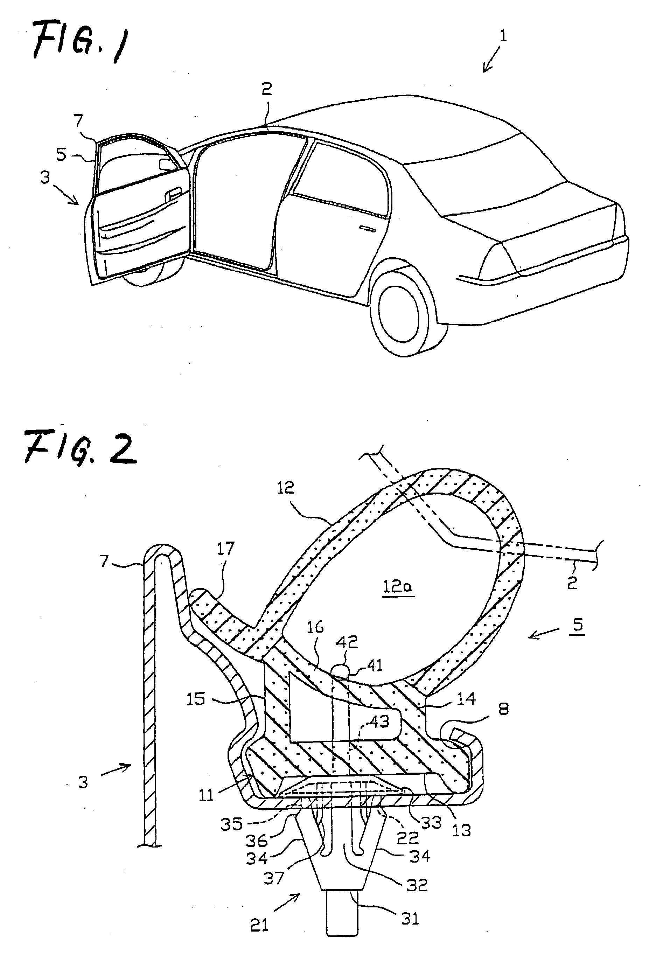

Hereinafter, an embodiment of a door weatherstrip of the invention will be described by reference to the drawings. As is shown in Fig. 1, an automotive vehicle door (in the figure, a front side door: hereinafter, referred to simply as a door 3) is provided in a door opening 2 formed in a vehicle body of an automotive vehicle 1 as a vehicle so as to be opened and closed. In addition, a door weatherstrip 5 is attached to a peripheral edge portion of the door 3. The door weatherstrip 5 is made up of a single extruded material almost all longitudinal part of which is formed by a predetermined extruding machine and is formed into a circular shape by connecting both longitudinal end portions of the extruded material. In addition, the door weatherstrip 5 may be formed into a single circular shape by connecting a plurality of extruded materials having various sectional shapes by molded portions.

As is shown in Fig. 2, the door weatherstrip 5 includes a mounted base portion 11 which is fitted in a mounting portion 8 having a substantially C-shaped cross section which is provided along an outer circumference of a door frame 7 and a seal portion 12 which extends from the mounted base portion 11 in an outer circumferential direction of the door 3. In this embodiment, the seal portion 12 has a hollow portion 12a in an interior thereof (the hollow seal portion).

In addition, the mounted base portion 11 includes a base bottom portion 13, a vehicle-interior side wall portion 14 and a vehicle-exterior side wall portion which extend from the base bottom portion 13 in the outer circumferential direction of the door 3, and an isolating wall portion. 16 which connects together the vehicle-interior side wall 14 and the vehicle-exterior side wall 15 and isolates the base bottom portion 13 from the seal portion 12.

Furthermore, in the embodiment, there is provided a sub-lip portion 17 which projects transversely outwards from the vicinity of a vehicle-exterior root portion of the seal portion 12. This sub-lip portion 17 is brought into press contact with an inner surface of an extension of the door frame 7 (a portion of the door frame 7 which extends in the outer circumferential direction at an vehicle-exterior side of the door weatherstrip) at a distal end portion thereof. In addition, when the door 3 -is closed, the seal portion 12 is brought into press contact with a peripheral part of the door opening 2 in the vehicle body and is then deformed, whereby a seal is established between the vehicle body and the door 3.

In this embodiment, clips 21 are attached to the mounted base portion 11 at predetermined intervals along the longitudinal direction of the door weatherstrip 5. In addition, the door weatherstrip 5 is attached to the mounting portion 8 by fitting the clips 21 in mounting holes 22 formed in the mounting portion 8. Additionally, the door weatherstrip 5 may be attached to the door 3 such that the base bottom portion 13 of the mounted base portion 11 is fitted in an inside of a retainer having a substantially C-shaped cross section which functions as the mounting portion 8.

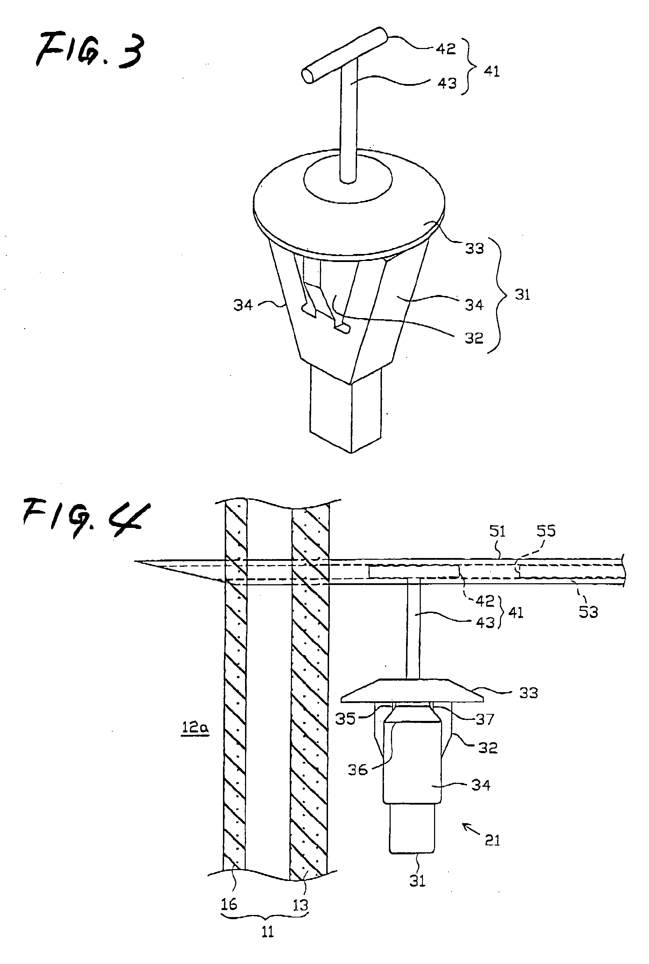

Here, the configuration of the clip 21 will be described. The clip 21 is made from a synthetic resin material such as polyoxymethylene and polyamide and includes, as is shown in Fig. 3, an engagement portion 31 which is fitted in the mounting hole 22 formed in the mounting portion 8 for engagement, and a locking portion 41 which is locked in the mounted base portion 11 (in this embodiment, the isolating wall portion 16).

The engagement portion 31 includes a rod-shaped shaft portion 32, an umbrella portion 33 which expands from one end portion of the shaft portion 32 in a flange-like manner, and a pair of support piece portions 34 which extend from an outer circumferential portion of the shaft portion 32 outwards and towards the umbrella portion 33 side. In addition, as is shown in Fig. 2, a projection 35 is formed at distal end portion of each support piece portion 34 to thereby form a stepped portion 36 on an outer surface thereof. In addition, an auxiliary plate portion 37 is formed which connects together an internal surface of each support piece portion 34 and the umbrella portion 33.

As is shown in Figs. 3 and the like, the locking portion 41 includes a cylindrical locking piece portion. 42 which extends in a direction which intersects at right angles a direction in which the shaft portion 32 extends and a cylindrical connecting portion 43 which connects a longitudinal central portion of the locking piece portion 42 and a central portion of the umbrella portion 32 and is formed to have a substantially T-shape as a whole.

Such that the clip 21 is attached to the mounted base portion 11, the locking piece portion 42 is situated within the hollow portion 12a and the isolating wall portion 16 and the base bottom portion 1.3 are held between the locking piece portion 42 and the umbrella portion 33. In addition, the connecting portion 43 has flexibility, and in this embodiment, due to the flexibility, the locking portion 41 can be inclined at about on the order of 90 degrees relative to the extending direction of the shaft portion 32 (until the locking portion 41 becomes substantially parallel to the extending direction of the shaft portion 32). Furthermore, the locking portion 41 so inclined can be restored substantially to its original state from that inclined state by virtue of its own elastic force.

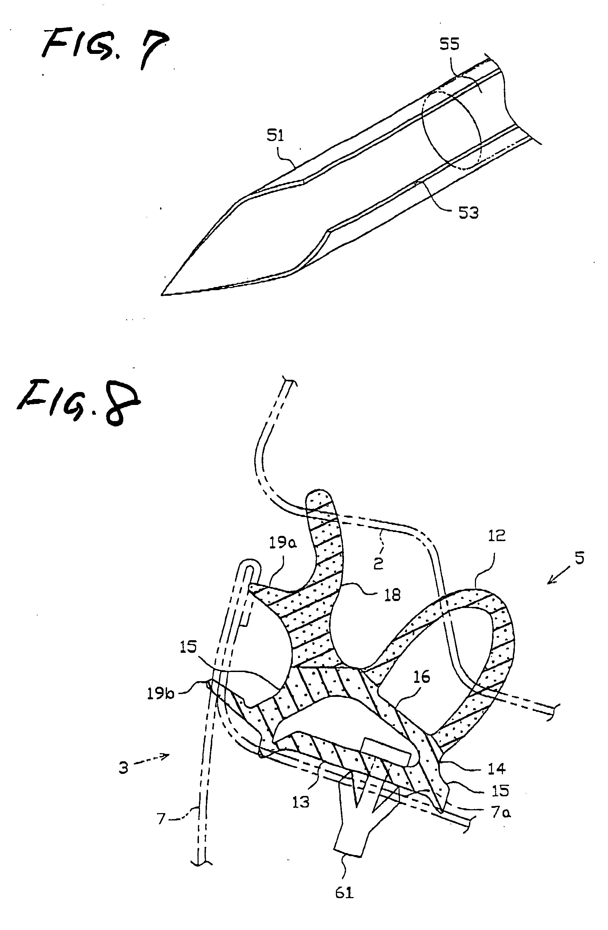

In addition, an inserting device (the inserting device) , for example, as is shown in Fig. 7 is used when attaching the .clip 21 to the door weatherstrip 5, and this inserting device includes a substantially tubular inserting pin 51 into an inner circumferential side of which the locking piece portion 42 is allowed to be inserted and a push rod 55 (a thrusting device) which can slide in a longitudinal direction of the inserting pin 51 on the inner circumferential side of the inserting pin. In the inserting pin 51, a slit 53 is formed into which the connecting portion 43 can be inserted along the longitudinal direction, and a width of the slit 53 is made larger than a diameter of the connecting rod portion 43 and smaller than a diameter of the locking piece portion 42. By this configuration, such that the locking piece portion 42 is set on the inner circumferential side of the inserting pin 51, the clip 21 can be made to slide along the longitudinal direction of the inserting pin 51 and the occurrence of a situation can be prevented in which the locking piece portion 42 is dislocated from the slit 53.

In addition, a distal end portion of the inserting pin 51 is pointed like a needle, and although no opening or the like is formed in advance in the mounted base portion 11 of the door weatherstrip 5, by the distal end portion being pressed against the mounted base portion 11 of the door weatherstrip 5, the distal end portion is allowed to pierce the mounted base portion 11 relatively smoothly.

In relation to an attaching procedure, firstly, as is shown in Fig. 4, the locking piece portion 42 is set on the inner circumferential side of the inserting pin 51, and then, the inserting pin 51 is made to pierce the bottom surface of the base bottom portion 13 substantially vertically.

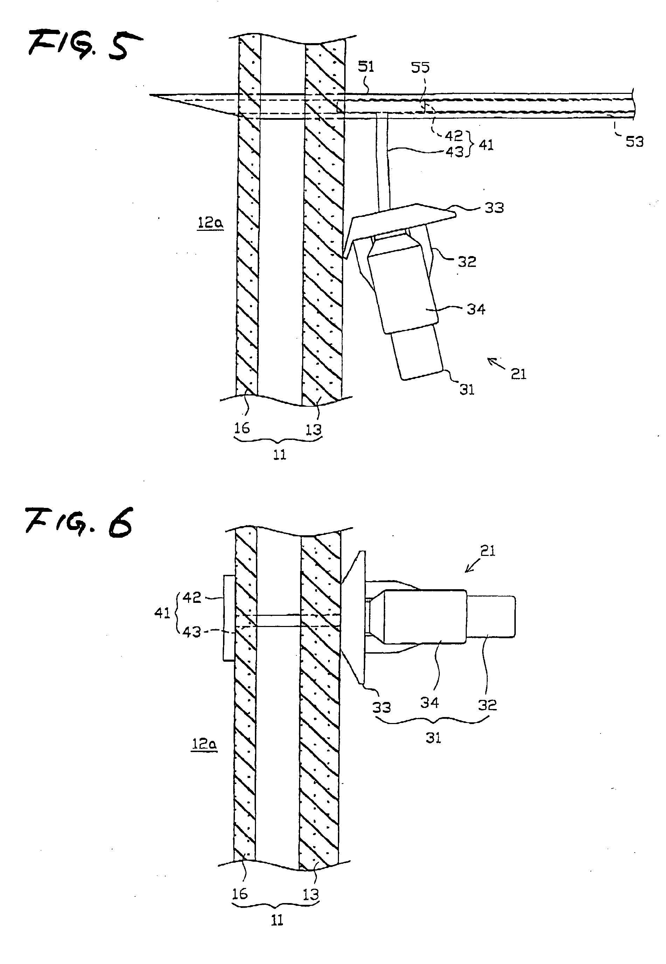

Then, as is shown in Fig. 5, the inserting pin 51 is made to pierce the base bottom portion 13 and the isolating wall portion 16 completely, so as to position the distal end portion of the inserting pin 51 (an opening formed in the distal end portion of the inserting pin 51) in the hollow portion 12a, and thereafter, the push rod 55 is caused to slide to a distal end side of the inserting pin 51. By the series of actions, the locking piece portion 42 is pushed by the push rod 55 and is pushed out of the distal end portion of the inserting pin 51. In the course of this action, although the umbrella portion 33 is brought into contact with the base bottom portion 13, since the connecting portion 43 and the umbrella portion 33 are deflected in a following manner, the push rod 55 can be pushed in deeper, whereby the whole of the locking piece portion 42 can be pushed out into an inside of the hollow portion 12a.

In addition, as is shown in Fig. 6, after the locking piece portion 42 has been pushed out from the distal end of the inserting pin 51, the inserting pin 51 is pulled out from the isolating wall portion 16 and the base bottom portion 13. In this way, the locking piece portion 42 is allowed to remain in the inside of the hollow portion 12a, whereby the locking piece portion 42 is locked on a hollow portion 12a side of the isolating wall portion 16.

Such that the door weatherstrip 5 is attached to the mounting portion 8, the mounting portion 8 on a peripheral edge of the mounting hole 22 is held between the umbrella portion 33 and distal end portions (the stepped portions 36) of the support piece portions 34. In addition, since the projections 35 are situated on an inner circumferential side of the mounting hole 22 and the stepped portions 36 are brought into engagement with a peripheral edge portion of the mounting hole 22, the clip 21 which is fitted in the mounting hole 22 and hence the door weatherstrip 5 can be prevented from being shifted. In addition, due to the existence of the umbrella portion 33, a seal can be established along the peripheral edge portion of the mounting hole 22 and the occurrence of a situation can be prevented in which the clip 21 is embedded too deep into the base bottom portion 13, thereby making it difficult for the engagement portion 31 to be fitted in the mounting hole 22.

Here, the door weatherstrip 5 of the embodiment is made from an EPDM (ethylene-propylene-diene copolymer) sponge rubber. However, the mounted base portion 11 (that is, the base bottom portion 13, both the side wall portions 14, 15 and the isolating wall portion 16) is made from a sponge rubber material having a specific gravity of 0.2 or larger and smaller than 0.45 and a low expansion stress (JIS K6251) of 200 kPa or larger, while the seal portion 12 is made from a sponge rubber material having a specific gravity of 0.45 or larger and 1.0 or smaller and a low expansion stress of 120 kPa or larger and smaller than 200 kPa. Thus, the sponge rubber material are used which enables the mounted base portion 11 to have a larger material rigidity than a material rigidity of the seal portion 12.

More specifically, the low expansion stress of the material making up the mounted base portion 11 is 230 kPa, while the low expansion stress of the material making up the seal portion 12 and the sub-lip portion 17 is 130 kPa. In addiction, a low expansion stress of 120 kPa or la.rger and smaller than 10 kPa is desirable for the low expansion stress of the sponge rubber material which makes up the seal portion 12 and the sub-lip portion 17, and a low expansion stress of 120 kPa or larger and smaller than 105 kPa is more desirable.

Additionally, in this embodiment, 5 parts by weight of a polyolefin-based resin (for example, a polyethylene resin) per 100 parts by weight of rubber is mixed into the material making up the mounted base portion 11, to thereby increase the low expansion stress of the mounted base portion 11 up to 230 kPa.

In addition, in the embodiment, the specific gravity of the mounted base portion is made to be 0.3 and the specific gravity of the seal portion 12 and the sub-lip portion 17 is made to be smaller than 0.55. Although the expansion ratio of the material for the mounted base portion 11 is preferably increased so as to realize a specific gravity of 0.2, which is lighter than the aforesaid specific gravity value, from the viewpoint of realization of reduced weight, in case this is attempted to be adopted, more polyethylene resin have to be mixed into the material in order to ensure the material rigidity, whereby the expansion is reduced by the amount by which the resin is increased. Consequently, in this embodiment, the specific gravity is determined to be 0.3 in consideration of the expansion of the material.

In addition, a specific gravity of 0.45 or larger and 0.8 or smaller is desirable for the specific gravity of the seal portion 12 and the sub-lip portion 17, and a specific gravity of 0.45 or larger and 0.6 or smaller is more desirable.

Additionally, the polyolefin-based resin is not mixed into the sponge rubber material of the seal portion 12 and the sub-lip portion 17. Consequently, although the specific gravity of these portions is slightly higher than the specific gravity of the mounted base portion 11, the material rigidity of the seal portion 12 and the sub-lip portion 17 does not become so high, and hence, these portions have excellent flexibility.

As has been described in detail heretofore, according to the embodiment, since the material rigidity (the low expansion stress being 230 kPa) of the mounted base portion 11 is made larger than the material rigidity (the low expansion stress being 130 kPa) of the seal portion 12, such that the door weatherstrip 5 is mounted in place, the mounted base portion 11 is not deformed. Consequently, the stabilization of the mounted state can be realized. On the other hand, since the material rigidity of the seal portion 12 is relatively small, such that the door 3 is closed, the seal portion 12 has superior deformation compliance when the seal portion 12 is brought into press contact with the peripheral part of the door opening 2. As a result, an increase in sealing properties can be realized.

Moreover, both the mounted base portion 11 and the seal portion 12 are made from the sponge rubber materials, a reduction in weight of the door weatherstrip 5 as a whole can be realized. In addition, speaking of the mounted base portion 11, although the material rigidity of the mounted base portion 11 is represented by the relatively large low expansion stress of 230 kPa, since the mounted base portion 11 is made from the sponge rubber material, when compared with a case where it is made of a solid rubber material, the mounted base portion 11 becomes .excellent in flexibility. As a result, the occurrence of a situation can be suppressed in which a closing load required when the door 3 is closed is increased.

In addition, in this embodiment, the specific gravity of the mounted base portion 11 having the larger material rigidity is 0.3, while the specific gravity of the seal portion 12 is 0.55, thus, the specific gravity of the mounted base portion 11 being smaller than that of the seal portion 12. In the invention, the specific gravity of the seal portion 12 is made to range from 0.45 or larger to 1.0 or smaller, while the specific gravity of the mounted base portion 11 is made to range from 0.2 or larger to smal.ler than 0.45. As a result, a remarkable reduction in weight of the door weatherstrip 5 as a whole can be realized.

Additionally, in the embodiment, although the specific gravity of the mounted base portion 11 is made small by increasing the expansion ratio, in the event that the foaming ratio is simply increased, the material rigidity is decreased, and the mounted base portion cannot function as intended. In this respect, in this embodiment, 5 parts of polyethylene resin per 100 parts of rubber is mixed into the material for the mounted base portion 11, whereby the material rigidity can be increased by virtue of the existence of the resin in question. In addition, the elastic restoration performance is not required for the mounted base portion 11 so much as for the seal portion 12. Because of this, even though there is caused a slight "set" due to the mixing of polyethylene resin, no specific problem is caused with the function of the mounted base portion 11.

Furthermore, in this embodiment, the clips 21 are attached to the mounted base portion 11, and the door weatherstrip 5 is mounted on the mounting portion 8 of the door 3 via the clips 21. The clip 21 of this embodiment is attached to the isolating wall portion 16 by sending out the locking piece portion 42 into the hollow portion 12a through the inner circumferential side of the inserting pin 51 which pierces the base bottom portion 13 and the isolating wall portion 16. Consequently, it becomes possible to omit the work to cut out or remove part of the mounted base portion 11 so as to form an opening therein in order to attach the clip 21 to the mounted base portion 11. Because of this, the generation of formed waste material in association with the formation of such an opening can be avoided, whereby labor hours and a device for removing formed waste material that would otherwise be generated can be omitted. As a result, an enhancement in productivity and quality can be realized. In addition, since the clip 21 can be attached to the mounted base portion 11 in a single step, so to speak, compared with the conventional technique which requires a step of forming opening.s in the mounted base portion 11 and a step of inserting the clips 21 into the openings so formed, an enhancement in working efficiency can be realized.

While the advantage described above can be provided, since the locking piece portion 42 and the connecting portion 43 of the clip 21 have to be made relatively thin due to their configurations, there is caused a concern about the stabilized attached stat of the clip. In this respect, since the rigidity of the mounted base portion 11 (the base bottom portion 13 and the isolating wall portion 16) is increased as represented by the low expansion stress of 230 kPa, even though the locking piece portion 42 and the connecting portion 43 are made thin, the stabilized attached state of the clip 21 can be ensured.

In addition, the invention is not limited to what has been described with respect to the embodiment, and hence, the invention may be carried out as follows. Needles to say, other application and modified examples which will not be illustrated can, of course, be adopted.
(a) In the embodiment, only the seal portion 12 having the hollow portion 12a is made to function as the seal portion. In contrast to this, a.s is shown in Fig. 8, the invention can be embodied into a door weatherstrip of a type which includes a seal lip 18 positioned further transversely outwards than a hollow portion 12a. In this case, a seal portion 12 having the hollow portion 12a and the seal lip 18 make up a seal portion.
(b) In the embodiment, while the part which projects transversely outwards from the vicinity of the root portion on the external side of the seal portion is illustrated as the sub-lip portion 17, a sub-lip may be provided which extends from other parts of the seal portion 12. For example, as is shown in Fig. 8, there may be provided a sub-lip portion 19a which extends from a location along the length of the seal lip 18 or a sub-lip portion 19b which extends from a mounted base portion 11.
(c) The clips 21 provided in the embodiment do not necessarily have to be provided. Consequently, for example, as is shown in Fig. 8, a door weatherstrip 5 can be attached with general clips 61 which are conventionally used.
(d) In addition, the clip 21 does not necessarily have to be such that it is locked in the isolating wall portion 16 as with the embodiment. For example, the clip 21 may be attached by the locking piece portion 42 being locked in the base bottom portion 13.
(e) In the embodiment, while the configuration in which the door weatherstrip 5 is attached to the door 3 via the clips 21 is illustrated as the attaching mechanism of the door weatherstrip 5 to the mounting portion 8, and the configuration in which the door weatherstrip 5 is fitted in the retainer having the substantially C-shaped cross section is illustrated as the other example of such a mechanism, as is shown in Fig. 8, the door weatherstrip 5 may be attached to a circumferential wall surface 7a of a door frame 7 by the general clips 61 or a pressure sensitive adhesive double coated tape without interposing the retainer having the substantially C-shaped cross section.
(f) In the embodiment, while the mixing of polyolefin-based resin is raised as the approach for increasing the material rigidity of the mounted base portion 11 to 200 kPa or more, there is another approach for achieving the aforesaid material rigidity of 200 kPa or larger in which the amount of diene mixed in the EPDM sponge rubber material of the mounted base portion is increased so as to increase its crosslinked density when rubber is vulcanized. Specifically, in the event that the amount of diene per 100 parts by weight of EPDM rubber in the seal portion is 4 or 5 parts by weight, 9 parts by weight of diene, which is double the amount in the seal portion, was mixed into the material for the mounted base portion to realize the low expansion stress of 200 kPa or larger.
(g) In addition, as the approach for increasing the material rigidity of the mounted base portion 11 to the low expansion stress of 200 kPa or larger, an approach may be adopted to achieve the low expansion stress of 200 kPa or lager in which the mixing of polyolefin-based resin is combined with the increasing o.f crosslinked density.
(h) In the embodiment, while the invention is embodied into the door weatherstrip 5 for the front side door, there is imposed no specific limitation on doors to which the door weatherstrip is attached, and hence, for example, the invention can be embodied into a door weatherstrip that is attached to a rear side door.

It is explicitly stated that all features disclosed in the description and/or the claims are intended to be disclosed separately and independently from each other for the purpose of original disclosure as well as for the purpose of restricting the claimed invention independent of the compositions of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A door weatherstrip comprising:
a mounted base portion adapted to be mounted on a mounting portion along a peripheral part of a vehicle door, and
a seal portion extending from the mounted base portion in an outer circumferential-direction of the door and adapted to be brought into press contact with a peripheral part of a door opening in a vehicle body such that the door is closed,
wherein the mounted base portion is made from a sponge rubber material having a specific gravity of 0.2 or larger and smaller than 0.4 5 and a low expansion stress of 200 kPa or larger,
wherein the seal portion is made from an EPDM sponge rubber material having a specific gravity of 0.45 or larger and 1.0 or smaller and a low expansion stress of 120 kPa or larger and smaller than 200 kPa,
whereby the specific gravity of the mounted base portion is made smaller than the specific gravity of the seal portion, and a material rigidity of the mounted base portion is made larger than a material rigidity of the seal portion.

2. A door weatherstrip as set forth in Claim 1, wherein the mounted base portion comprises a base bottom portion, a vehicle-interior side wall portion and a vehicle-exterior side wall portion which extend from the base bottom portion in the outer circumferential direction of the door and an isolating wall portion which connects together the vehicle-interior side wall portion and the vehicle-exterior side wall portion and isolates the base bottom portion from the seal portion, and
wherein material rigidities of the base bottom portion, the vehicle-interior and vehicle-exterior side walls and the isolating wall portion are made larger than the material rigidity of the seal portion.

3. A door weatherstrip as set forth in Claim 1 or 2, wherein
the seal portion includes a hollow seal portion which .has a hollow portion in an interior thereof, and
wherein the material rigidity of the mounted base portion is made larger than the material rigidity of the hollow seal portion.

4. A door weatherstrip as set forth in Claim 3, wherein the seal portion includes further a seal lip which is situated further transversely outwards than the hollow seal portion, and
wherein the material rigidity of the mounted base portion is made larger than a material rigidity of the seal lip.

5. A door weatherstrip as set forth in any one of Claims 1 to 4, wherein the mounted base portion is made from a sponge rubber material into which a polyolefin-based resin is mixed.

6. A door weatherstrip as set forth in any one of Claims 1 to 4, wherein diene loadings in rubber of the EPDM sponge rubber material of the mounted base portion is more than diene loadings in rubber of the seal portion and a crosslinked density of the EPDM sponge rubber material of the mounted base portion is enhanced so as to be more than a crosslinked density of the seal portion when the EPDM sponge rubber material of the mounted base portion is vulcanized, so that the low expansion stress of the EPDM sponge rubber material of the mount base portion is increased to 200 kPa or larger.
